# FASCICULE DE BREVET EUROPEEN

(11) **EP 2 454 773 B1**
(45) Date de publication et mention de la délivrance du brevet: **28.08.2013**
(21) Numéro de dépôt: 10731742.2
(22) Date de dépôt: 12.07.2010
(51) Int. Cl.: H01M 8/02, H01M 8/04, H01M 8/10, H01M 8/24

(54) **PILE A COMBUSTIBLE A ENCOMBREMENT REDUIT**
KOMPAKTE BRENNSTOFFZELLE
COMPACT FUEL CELL

(30) Priorité: 15.07.2009 FR 0954888
(43) Date de publication de la demande: 23.05.2012
(73) Titulaire: Commissariat à l'Énergie Atomique et aux Énergies Alternatives, 75015 Paris (FR)
(72) Inventeur: DROUHAULT, Delphine, F-38120 Saint Egreve (FR); LEVRARD, Daniel, F-38300 Domarin (FR); MANICARDI, Philippe, F-38600 Fontaine (FR); NIVELON, Pierre, F-38660 Saint Hilaire du Touvet (FR)
(74) Mandataire: Ilgart, Jean-Christophe
(86) Numéro de dépôt international: PCT/EP2010/059966
(87) Numéro de publication internationale: WO 2011/006860

(56) Documents cités:
- US-A1- 2002 037 447
- US-A1- 2005 221 149
- US-A1- 2005 282 060
- US-A1- 2006 216 554
- US-A1- 2007 287 045
- US-A1- 2008 299 429

## Description

La présente invention se rapporte à une pile à combustible à encombrement réduit et à régulation thermique améliorée.

Une pile à combustible, pour délivrer de l'électricité, est alimentée en gaz carburant, par exemple de l'hydrogène dans le cas d'une pile de type piles à combustible à membrane d'échange de protons (PEMFC pour « Proton Exchange Membrane Fuel Cell »), et en gaz comburant, par exemple de l'air ou de l'oxygène. Le fonctionnement de la pile à combustible a également pour effet de produire de l'énergie thermique.

Par ailleurs, le rendement électrochimique de la pile est dépendant de la température au sein de la pile et ceci du fait de la nature des matériaux utilisés. Par conséquent, cette température doit être contrôlée afin d'obtenir un rendement le plus élevé possible. En effet, si la température de fonctionnement est trop basse, on ne peut atteindre le meilleur rendement de fonctionnement de la pile à combustible, et si la pile subit une élévation de température trop importante, les matériaux constituant la pile peuvent être endommagés .

Or, comme expliqué précédemment, la pile génère de la chaleur lors de son fonctionnement. Cette chaleur doit généralement être évacuée pour limiter l'élévation de température au sein de la pile. Dans le cas des piles à moyennes à fortes densités de puissance, une circulation d'un fluide caloporteur à l'intérieur de la pile est généralement prévue, ce caloporteur est refroidi à l'extérieur de la pile en circulant dans un échangeur thermique avant de circuler à nouveau dans la pile. La circulation du fluide caloporteur est généralement obtenue au moyen d'une pompe.

Cependant, si lors du fonctionnement on cherche à évacuer les calories afin d'éviter une élévation de la température, lors du démarrage de la pile on souhaite réduire l'évacuation des calories afin de permettre la montée en température du fluide et d'atteindre une température optimale de fonctionnement, qui est de l'ordre de 80°C dans le cas des PEMFC.

Le document US2007/0042247A décrit une pile à combustible muni d'un système de gestion thermique, ce système comporte un circuit extérieur à la pile dans lequel est refroidi le fluide caloporteur dans un échangeur thermique. Une vanne thermostatique est prévue dans ce circuit à l'extérieur de la pile pour gérer la circulation du caloporteur en sortie de la pile, et l'envoyer en tout ou partie vers l'échangeur thermique. Ainsi, si la température du caloporteur est inférieure à la température de fonctionnement souhaitée de la pile, le fluide caloporteur est renvoyé dans la pile sans être refroidi.

Or ce système de gestion thermique peut être très encombrant. En effet, les piles à combustibles de moyennes et fortes puissances comportent d'autant plus d'éléments que la puissance recherchée est importante. La puissance thermique à évacuer est donc d'autant plus importante que la densité de puissance recherchée est forte. Par conséquent, le circuit du fluide caloporteur présente des sections de passage importantes, ce qui augmente l'encombrement de l'ensemble.

Or il est rappelé que ce type de pile est notamment destiné à être embarqué dans des véhicules comme source d' énergie de propulsion. Par conséquent, son encombrement est un point important.

Le document US 2002/0037447 décrit un système de refroidissement d'une pile à combustible comportant un circuit de circulat:ion d'un caloporteur mettant en oeuvre une vanne trois voies comportant deux voies d'alimentation et une voie d'échappement. Le document US 2007/028 7045 présente une pile à combustible comprenant un échangeur thermique intégré à l'empilement des cellules électrochimiques. Le document US 2005/0221149 présente une pile à combustible qui comprend un élément de commande de débit, ouvrant et fermant un circuit de circulation d'un fluide caloporteur, intégré à une plaque d'extrémité.

C'est par conséquent un but de la présente invention d'offrir une pile à combustible équipée d'un système de gestion thermique d'encombrement réduit par rapport aux ensembles de l'état de la technique.

C'est également un but de la présente invention d'offrir une pile à combustible équipée d'un système de gestion thermique dont les conditions de température optimales en début de fonctionnement sont plus facilement atteintes.

### EXPOSÉ DE L'INVENTION

Les buts précédemment énoncés sont atteints par une pile à combustible comportant un empilement de cellules électrochimiques entre deux plaques d'extrémité exerçant sur l' empilement un effort de serrage est un système de gestion thermique comportant un circuit de circulation d'un fluide caloporteur au sein de l'empilement, l'entrée et la sortie du circuit se trouvant dans l'une des plaques bipolaires, et un circuit de circulation à l'extérieur de l'empilement comportant un sous-circuit destiné à assurer un échange thermique entre le fluide et l'environnement extérieur, et un sous-circuit destiné à renvoyer directement le fluide caloporteur au sein de l'empilement, des moyens pour contrôler le passage du fluide caloporteur dans l'un et/ou l'autre des sous-circuits en fonction de la température du fluide caloporteur, lesdits moyens étant disposés dans ladite plaque d'extrémité.

De manière particulièrement avantageuse, les moyens de contrôle sont formés par une vanne thermostatique permettant la communication vers l'un et/ou l'autre des sous-circuits en fonction de la température du fluide caloporteur.

En d'autres termes, on intègre les moyens de régulation de la circulation du fluide dans la plaque d'extrémité connectée aux sous-circuits, ce qui réduit l'encombrement de l'ensemble.

La présente invention a alors principalement pour objet une pile à combustible comportant un empilement de cellules électrochimiques et des plaques d'extrémité appliquant un effort de serrage sur les cellules électrochimiques, un système de gestion thermique formé par un circuit de circulation d'un fluide caloporteur dans l'empilement, dit circuit intérieur, et d'un circuit de circulation du fluide caloporteur à l'extérieur de l'empilement, dit circuit extérieur, le circuit intérieur et le circuit extérieur se raccordant au niveau d'au moins une des plaques d'extrémité, le circuit extérieur comportant un premier sous-circuit muni d'un échangeur thermique et un deuxième sous-circuit connecté directement à l'entrée du circuit intérieur, un dispositif pour commander la circulation du fluide caloporteur dans l'un et/ou l'autre des sous-circuits en fonction de la température dudit fluide à la sortie du circuit intérieur, ledit dispositif de commande étant intégré dans une des plaques d'extrémité.

Selon une caractéristique de l'invention, ladite plaque d'extrémité comporte un passage de communication entre le circuit intérieur et l'un des sous-circuits, ledit passage étant perpendiculaire au plan de ladite plaque d'extrémité et un passage de communication entre le circuit intérieur et l'autre sous-circuit, ledit passage de communication s'étendant dans le plan de la plaque d'extrémité.

Ledit dispositif de commande est une vanne trois voies, dont une voie d'alimentation est connectée à la sortie du circuit intérieur, une voie d'échappement est connectée à l'entrée d'un premier sous-circuit et l'autre voie d'échappement est connectée à l'entrée du deuxième sous-circuit.

De manière avantageuse, ladite vanne trois voies est une vanne thermostatique. Celle-ci peut comporter un élément dont le volume varie en fonction de la température du fluide caloporteur, un obturateur mobile axialement sous l'action dudit élément dans une portion de canal située entre l'entrée du premier sous-circuit et l'entrée du deuxième sous-circuit, et deux sièges de clapet disposés de part et d'autre de l'obturateur, l'obturateur coopérant avec l'un ou l'autre des sièges de clapet en fonction de la température du fluide caloporteur pour obturer l'une ou l'autre des voies d'échappement.

Par exemple, ladite plaque d'extrémité comporte une chambre de collecte dans laquelle débouche la sortie du circuit intérieur, la vanne thermostatique étant disposée sensiblement au centre de celle-ci, la voie d'admission de ladite vanne étant telle que le fluide caloporteur pénétrant dans ladite vanne entoure l'élément dont le volume varie en fonction de la température.

La chambre de collecte peut présenter la forme d'un conduit axial, le circuit intérieur se connectant latéralement à ladite chambre de collecte, l'obturateur se déplaçant orthogonalement à l'axe du conduit, l'entrée du premier sous-circuit étant situé d'un côté de l'axe du conduit et l'entrée du deuxième sous-circuit étant situé de l'autre côté de l'axe du conduit.

L'axe de la chambre de collecte est par exemple sensiblement parallèle à un côté de la plaque d'extrémité, à proximité de ce côté, le canal transversal dans lequel se déplace l'obturateur débouchant axialement par une extrémité dans ledit côté et se connecte à l'un des sous-circuits, et débouche dans la face de la plaque d'extrémité orthogonalement à son axe et se connecte à l'autre sous-circuit.

La pile à combustible est par exemple du type PEMFC.

### BRÈVE DESCRIPTION DES DESSINS

La présente invention sera mieux comprise à l'aide de la description qui va suivre et des dessins sur lesquels :
- la figure 1 est une représentation schématique d'une pile à combustible équipée d'un système de régulation thermique selon la présente invention,
- la figure 2A est une vue en coupe selon la plus grande surface d'un exemple de plaque d'extrémité de la pile de la figure 1,
- la figure 2B est une vue en coupe transversale le long du plan A-A de la plaque de la figure 2A,
- les figures 3A et 3B sont des vues de détail de la figure 2A dans deux états de fonctionnement.

### EXPOSÉ DÉTAILLÉ DE MODES DE RÉALISATION PARTICULIERS

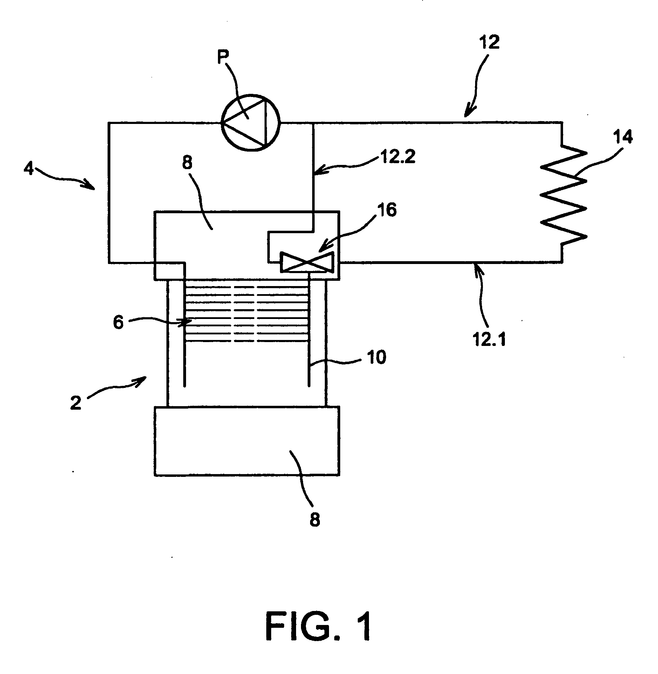

Sur la figure 1, on peut voir une représentation schématique d'une pile à combustible 2 équipée d'un système de régulation thermique 4 selon la présente invention.

La pile à combustible 2 comporte un empilement 6 de cellules électrochimiques composées de plaques bipolaires et de membranes échangeuses d'ions disposées en alternance, et deux plaques d'extrémité 8 de part et d'autre de l'empilement. Les plaques d'extrémité 8 exercent un effort de compression sur l'empilement 6 pour assurer une conduction électrique uniformément répartie sur toute la surface des éléments composant les cellules.

Par ailleurs, l'alimentation des cellules en fluide réactif, par exemple en hydrogène d'une part et en oxygène d'autre part, est réalisée à travers une ou les deux plaques d'extrémité 8. La ou les plaques d'extrémité comportent des orifices d'alimentation et d'évacuation connectés à la fois à un circuit au sein de l'empilement, et à un circuit d'alimentation et de récupération (non représenté). L'effort de serrage appliqué par les plaques d'extrémité 8 assure également une bonne étanchéité aux gaz réactifs.

Le système de régulation thermique 4 comporte un circuit de circulation du fluide caloporteur dont une partie 10 permet une circulation au sein de l'empilement 6 et dont une autre partie 12 permet une circulation à l'extérieur de l'empilement 6.

Le circuit de circulation traverse l'une des plaques d'extrémité 8.

La partie 10 du circuit de circulation au sein de l'empilement 6, dit circuit intérieur, est par exemple réalisée directement dans les cellules. L'effort de serrage appliqué par les plaques d'extrémité 8 assure également une bonne étanchéité au fluide caloporteur.

Le circuit de circulation comporte une pompe de circulation P pour assurer la circulation du fluide caloporteur dans l'empilement et à l'extérieur de celui-ci.

La partie 12 du circuit à l'extérieur de l'empilement, dit circuit extérieur 12, comporte deux sous-circuits de circulation 12.1, 12.2. Le premier sous-circuit 12.1 comporte un échangeur thermique 14 pour permettre au fluide caloporteur d'échanger des calories avec l'environnement extérieur, par exemple pour céder des calories à l'extérieur. Mais on peut envisager qu'il capte des calories de l'environnement extérieur.

Le deuxième sous-circuit 12.2 est destiné à permettre un retour du fluide caloporteur dans l'empilement sans qu'il traverse l'échangeur. Ce deuxième sous-circuit est donc connecté hydrauliqueznent en parallèle avec l'empilement et le premier sous-circuit 12.1 et permet d'éviter la circulation du fluide dans le premier sous-circuit 12.1.

La circulation du fluide caloporteur dans l'un ou l'autre des sous-circuits 12.1, 12.2 est obtenue au moyen d'une vanne trois voies 16.

Selon la présente invention, la vanne 16 est disposée à l'intérieur de l'une des plaques d'extrémité 8, cette intégration permettant de réduire l'encombrement du système de régulation thermique.

Dans la suite de la description, nous décririons une seule plaque d'extrémité 8. Mais il est bien entendu que invention peut concerner les deux plaques d'extrémité.

La vanne 16 de commande est connectée à la sortie du circuit intérieur 10 et aux entrées des sous-circuits 12.1, 12.2 et assure le passage de tout ou partie du fluide caloporteur dans l'un ou l'autre des sous-circuits 12.1, 12.2.

La vanne de commande 16 est commandée en fonction de la température du fluide caloporteur sortant.

Par exemple, la vanne de commande 16 peut être une vanne trois voies asservie à une mesure de la température du fluide caloporteur, par exemple au moyen d'une sonde de température plongeant dans le fluide caloporteur et une unité électronique commandant l'état de la vanne.

De manière particulièrement avantageuse, la vanne de commande 16 est une vanne thermostatique dont l'état est directement commandé par le fluide caloporteur, plus particulièrement sa température, sans nécessiter de moyens supplémentaires, par exemple de type électronique. Outre une fiabilité et une robustesse accrues de la commande de la vanne, un gain de place supplémentaire est obtenu.

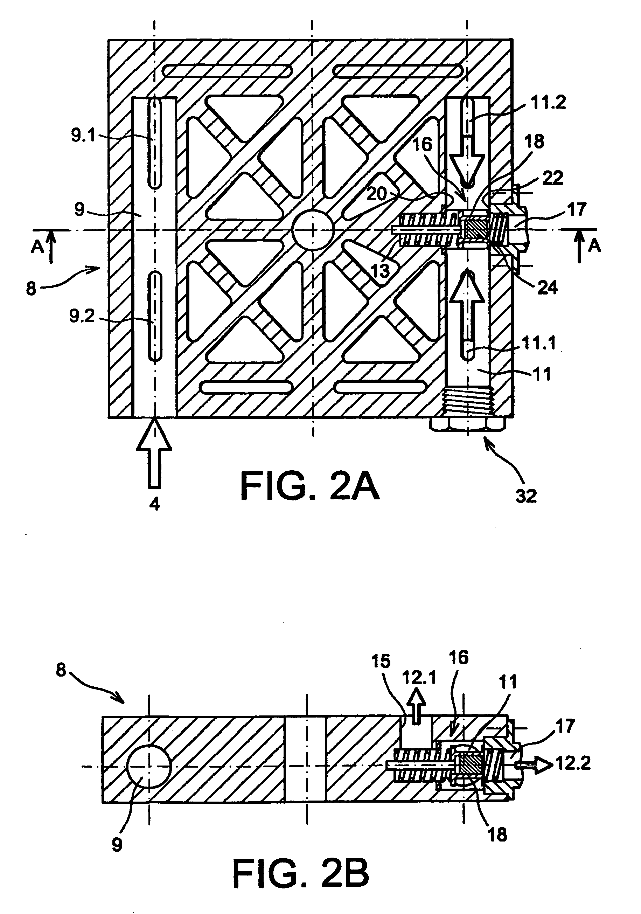

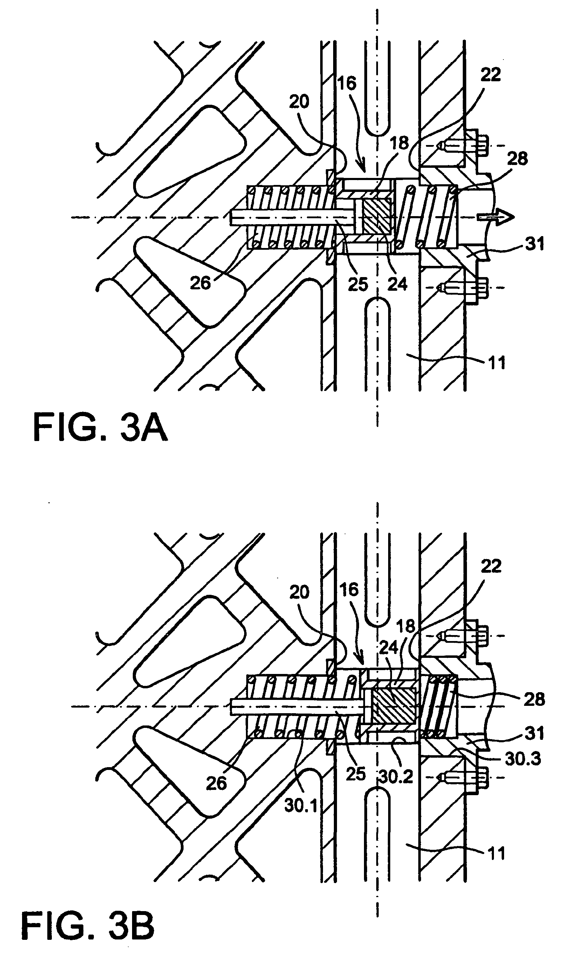

Dans l'exemple représenté sur les figures 2A à 3B, la plaque d'extrémité 8 comporte un conduit 9 non débouchant assurant l'alimentation en fluide caloporteur de l'empilement, ce conduit 9 est réalisé dans le plan de la plaque et intercepte deux canaux transversaux 9.1 amenant le fluide au sein de l'empilement. Ce conduit 9 forme l'entrée du circuit intérieur 10. L'extrémité ouverte du conduit 9 est connectée au circuit extérieur 12.

La plaque d'extrémité 8 comporte également un conduit 11, formant chambre de collecte, réalisé dans le plan de la plaque et interceptant deux canaux transversaux 11.1, 11.2 desquels le fluide sort de l'empilement. Le conduit 11 forme la sortie du circuit intérieur 10. Dans l'exemple représenté, les conduits 8 et 9 sont parallèles, mais cette disposition n'est en aucun cas limitative.

La plaque d'extrémité 8 comporte également un passage vertical 15, dans la représentation de la figure 2B, pour connecter le circuit intérieur 10 au premier sous-circuit 12.1 et un passage latéral 17 pour connecter le circuit intérieur 10 au deuxième sous-circuit 12.2.

Un canal 13 est réalisé dans le prolongement du passage latéral 17, celui-ci croise le conduit 11, et intercepte le passage vertical 15, mettant ainsi en communication la sortie du circuit de fluide caloporteur dans l'empilement, l'entrée du premier sous-circuit 12.1 et l'entrée du deuxième sous-circuit 12.2.

La vanne thermostatique comporte un obturateur 18 mobile axialement dans le canal 13, deux sièges de clapet 20, 22, un élément 24 dont le volume est sensible à la température et reliant l'obturateur à la plaque d'extrémité. Dans l'exemple représenté, l'élément 24 est fixé à une tige 25 fixée dans le fond du canal 13. La dilatation ou la contraction de l'élément 24 provoque le déplacement axial de l'obturateur entre les deux sièges de clapet 20, 22. L'élément 24 est par exemple une cire ou un gaz confiné dans une poche. Des ressorts 26, 28 sont montés en réaction entre le passage 13 et l'obturateur mobile 18 assurant le retour en position de l'obturateur et son maintien en place. Un siège de clapet 20 est situé entre la sortie du fluide caloporteur et l'entrée du premier sous-circuit 12.1, la coopération de l'obturateur 18 et de ce siège 20 fermant la communication entre la sortie du fluide et le premier sous-circuit. Le deuxième siège de clapet 22 est situé entre la sortie du fluide caloporteur et l'entrée du deuxième sous-circuit 12.2, la coopération de l'obturateur 18 et de ce siège 22 fermant la communication entre la sortie du fluide et le deuxième sous-circuit 12.2.

Dans l'exemple représenté, le canal 13 est formé de trois alésages concentriques 30.1, 30.2, 30.3 de diamètre croissant, le premier siège de clapet 20 étant formé par la différence de diamètre entre le premier et le deuxième alésage 30.1, 30.2.

Le deuxième siège de clapet est formé en rapportant une bague 31 dans le passage latéral 17.

On peut prévoir de recouvrir les sièges de clapet 20, 22 avec un matériau particulier pour assurer un bon contact avec l'obturateur et limiter les fuites entre l'obturateur et le siège avec lequel il est en contact.

Le ressort 26 est en appui entre le fond du canal 13 et l'obturateur 18 et le ressort 28 est en appui entre un épaulement réalisé dans la bague 31 et l'obturateur 18.

Un bouchon 32 est prévu au niveau de l'extrémité ouverte du conduit 11 pour fermer le conduit 11.

Dans l'exemple représenté, le passage de communication 15 avec le premier sous-circuit 12.1 est perpendiculaire au plan de la plaque et le passage de communication 17 avec le deuxième sous-circuit 12.2 est dans le plan de la plaque d'extrémité. Cette orientation particulière permet de simplifier la connexion de la plaque d'extrémité 8 aux premier et deuxième sous-circuits 12.1, 12.2.

De manière particulièrement avantageuse, l'orifice d'entrée de la vanne de commande 16 s'étend de part et d'autre de l'élément 24 sensible à la température. Ainsi il est immergé dans le fluide caloporteur, ce qui le rend encore plus sensible à la variation de température du fluide caloporteur, il réagit alors rapidement.

Nous allons maintenant expliquer le fonctionnement de la pile selon la présente invention, et plus particulièrement de son système de régulation thermique.

Lors de la mise en route de la pile à combustible 2, le fluide caloporteur circule dans la partie 10 du circuit de circulation. Le fluide caloporteur, dit fluide froid, a une température inférieure à la température de fonctionnement souhaitée de la pile.

Le fluide froid est en contact avec la vanne de commande 12, l'élément sensible à la température 24 se contracte, l'obturateur entre en contact avec le siège de clapet 20, ferme le passage 30, interrompant la communication entre le premier sous-circuit 12.1 et le circuit au sein de l'empilement. Le fluide caloporteur circule alors dans le passage 17 et dans le deuxième sous-circuit 12.2 et est renvoyé directement dans l'empilement. Le fluide caloporteur n'est alors pas refroidi dans l'échangeur thermique et les calories qu'il a pu capter en circulant dans l'empilement sont directement réintroduites dans l'empilement facilitant la montée en température de l'empilement. Généralement, le fluide caloporteur est en permanence dans l'empilement, même en dehors des phases de fonctionnement, par conséquent hors fonctionnement l'obturateur est en appui contre le siège 20.

La température au sein de la pile, et de fait celle du fluide caloporteur, augmente progressivement. L'élément sensible à la température 24 se dilate progressivement, l'obturateur 18 se décolle du siège 24, le fluide caloporteur circule alors dans les deux sous-circuits 12.1, 12.2, la position de l'obturateur commandant la répartition entre les deux sous-circuits. La plage de température d'ouverture/fermeture de la vanne thermostatique est choisie de manière adaptée, la régulation s'effectue de manière progressive.

Ensuite, lorsque la pile atteint sa température de fonctionnement, il est nécessaire d'extraire des calories pour limiter le dépassement de la température de fonctionnement souhaitée. Le fluide caloporteur doit alors évacuer les calories dégagées au sein de l'empilement. Le caloporteur a désormais une température sensiblement égale à celle de l'empilement, il est dit chaud.

Le fluide caloporteur chaud est en contact avec l'élément sensible à la température 24, celui-ci se dilate, l'obturateur vient en contact avec le siège de clapet 22, ferme le passage 17, interrompant la communication entre le deuxième sous-circuit et le circuit au sein de l'empilement. Le fluide caloporteur circule alors dans le passage 15 et dans le premier sous-circuit 12.1. Il traverse alors l'échangeur thermique, et perd des calories. Le fluide caloporteur refroidi pénètre de nouveau dans l'empilement.

Le fonctionnement de la pile a lieu dans une gamme optimale de températures. Le début de la plage d'ouverture de la vanne thermostatique correspond au seuil bas de la température optimale de fonctionnement : seule une partie du fluide est alors dérivée pour être refroidie. Si la température du fluide augmente, cette proportion augmente, jusqu'à ce que tout le fluide soit dévié lorsque le seuil haut de la plage de fonctionnement est atteint.

L'intégration de la vanne de commande dans la ou les plaque(s) d'extrémité n'implique pas de modifier les dimensions extérieures de la ou les plaque(s) d'extrémité. En effet, afin d'assurer leur fonction principale, qui est une fonction mécanique de serrage, les plaques terminales présentent une épaisseur relativement importante. Il est alors aisé d'intégrer une vanne de commande sans modifier l'encombrement initial de la plaque et sans que cela présente une difficulté technique importante, par exemple pour réaliser des usinages. Les débits de fluide caloporteur requis peuvent être obtenus.

Nous allons maintenant donner un exemple de dimensionnement d'une telle vanne de commande

Nous considérons l'exemple d'une pile de type PEMFC de 30 kW, dont une des plaques terminales a une épaisseur de l'ordre de 40 mm. Cette épaisseur de plaque permet d'intégrer une vanne thermostatique comprenant un volume de dilatation de l'ordre de 1 cm³, ce qui permet de faire circuler sélectivement un débit de fluide caloporteur, tel que de l'eau déionisée, de l'ordre de 2 m³/h avec des sections de passage au niveau des orifices de l'ordre de 500 mm² pour une perte de charge de l'ordre de 50 mbar.

Le déplacement de l'obturateur dans le présent exemple est de l'ordre de 5 mm.

La vanne selon la présente invention permet avantageusement de n'utiliser qu'un nombre très restreint de pièces mécaniques pour gérer la circulation du fluide caloporteur en fonction de sa température. En effet, la vanne comporte deux ressorts, un obturateur et un élément sensible à la température et un nombre réduit d'alésages. Dans l'exemple représenté, elle comporte quatre alésages concentriques. La réalisation industrielle est donc facilitée et le coût de revient limité.

La présente invention, outre son encombrement réduit, permet de limiter les pertes thermiques en début de fonctionnement de la pile et donc de permettre une montée en température plus rapide que dans l'état de la technique. En effet, la disposition de la vanne de commande dans une des plaques d'extrémité permet d'avoir un deuxième sous-circuit de retour direct dans l'empilemenl de longueur réduite, ce qui limite les pertes thermiques inévitables. On peut également prévoir d'isoler thermiquement le deuxième scus-circuit pour réduire les pertes thermiques.

Les deux plaques d'extrémité peuvent être équipées d'une vanne thermostatique, par exemple dans le cas d'empilement de grande taille, ou dans le cas où le circuit de refroidissement rend les deux plaques d'extrémité équivalentes en température, afin d'évacuer la chaleur au niveau des deux extrémités de l'empilement.

## Revendications

1. Pile à combustible comportant un empilement (6) de cellules électrochimiques et des plaques d'extrémité (8) appliquant un effort de serrage sur les cellules électrochimiques, un système de gestion thermique formé par un circuit de circulation d'un fluide caloporteur dans l'empilement (6), dit circuit intérieur (10), et d'un circuit de circulation du fluide calcpo=teur à l'extérieur de l'empilement (6), dit circuit extérieur (12), le circuit intérieur (10) et le circuit extérieur (12) se raccordant au niveau d'au moins une des plaques d'extrémité (10), le circuit extérieur (12) comportant un premier sous-circuit (12.1) muni d'un échangeur thermique (14) et un deuxième scus-circuit (12.2) connecté directement à l'entrée du circuit intérieur (10), un dispositif (16) pour commander la circulation du fluide caloporteur dans l'un et/ou l'autre des sous-circuits (12.1, 12.2) en fonction de la température dudit fluide à la sortie du circuit intérieur (10), **caractérisé en ce que** ledit dispositif de commande (16) est intégré dans ladite plaque d'extrémité (8), **en ce que** ladite plaque d'extrémité comporte un passage de communication (15) entre le circuit intérieur (10) et l'un des sous-circuits (12.1), ledit passage (15) étant perpendiculaire au plan de ladite plaque d'extrémité (8) et un passage de communication (17) entre le circuit intérieur (10) et l'autre sous-circuit (12.2), ledit passage de communication (17) s'étendant dans le plan de la plaque d'extrémité, et **en ce que** ledit dispositif de commande (16) est une vanne trois voies, dont une voie d'alimentation est connectée à la sortie du circuit intérieur (10), une voie d'échappement est connectée à l'entrée du premier sous-circuit (12.1) et l'autre voie d'échappement est connectée à l'entrée du deuxième sous-circuit (12.2).

2. Pile à combustible selon la revendication 1, dans laquelle ladite vanne trois voies (16) est une vanne thermostatique.

3. Pile à combustible selon la revendication précédente, dans laquelle la vanne trois voies (16) comporte un élément (24) dont le volume varie en fonction de la température du fluide caloporteur, un obturateur (18) mobile axialement sous l'action dudit élément (24) dans une portion de canal située entre l'entrée du premier sous-circuit (12.1) et l'entrée du deuxième sous-circuit (12.2), et deux sièges de clapet (20, 22) disposés de part et d'autre de l'obturateur (18), l'obturateur (18) coopérant avec l'un ou l'autre des sièges de clapet (20, 22) en fonction de la température du fluide caloporteur pour obturer l'une ou l'autre des voies d'échappement.

4. Pile à combustible selon la revendication précédente, dans laquelle ladite plaque d'extrémité (8) comporte une chambre de collecte (11) dans laquelle débouche la sortie du circuit intérieur (10), la vanne thermostatique (16) étant disposée sensiblement au centre de celle-ci, la voie d'admission de ladite vanne (16) étant telle que le fluide caloporteur pénétrant dans ladite vanne (16) entoure l'élément (24) dont le volume varie en fonction de la température.

5. Pile à combustible selon la revendication précédente, dans laquelle la chambre de collecte (11) présente la forme d'un conduit axial, le circuit intérieur (10) se connectant latéralement à ladite chambre de collecte, l'obturateur (18) se déplaçant orthogonalement à l'axe du conduit, l'entrée du premier sous-circuit (12.1) étant situé d'un côté de l'axe du conduit et l'entrée du deuxième sous-circuit (12.2) étant situé de l'autre côté de l'axe du conduit.

6. Pile à combustible selon la revendication précédente 4 ou 5, dans laquelle l'axe de la chambre de collecte (11) est sensiblement parallèle à un côté de la plaque d'extrémité (8), à proximité de ce côté, le canal transversal dans lequel se déplace l'obturateur (18) débouchant axialement par une extrémité dans ledit côté et se connecte à l'un des sous-circuits, et débouche dans la face de la plaque d'extrémité (8) orthogonalement à son axe et se connecte à l'autre sous-circuit.

7. Pile à combustible selon l'une des revendications précédentes, la pile étant du type PEMFC.

## Patentansprüche

1. Brennstoffzelle mit einem Stapel (6) von elektrochemischen Zellen und endseitigen Platten (8), die eine Spannkraft auf die elektrochemischen Zellen ausüben, einer Wärmekontrolleinrichtung, die aus einem Umwälzkreislauf, dem sogenannten inneren Kreislauf (10) zum Umwälzen eines Wärmeträgermediums in dem Stapel (6) und aus einem Umwälzkreislauf, dem sogenannten äußeren Kreislauf (12) zum Umwälzen des Wärmeträgermediums außerhalb des Stapels (6) gebildet ist, wobei der innere Kreislauf (10) und der äußere Kreislauf (12) im Bereich zumindest einer der endseitigen Platten (10) angeschlossen sind, wobei der äußere Kreislauf (12) einen ersten Unterkreis (12.1) aufweist, der mit einem Wärmetauscher (14) versehen ist, sowie einen zweiten Unterkreis (12.2), der ummittelbar mit dem Einlass des inneren Kreislaufs (10) verbunden ist, und mit einer Vorrichtung (16) zum Steuern der Umwälzung des Wärmeträgermediums in dem einen und/oder anderen der Unterkreise (12.1, 12.2) in Abhängigkeit von der Temperatur des Mediums am Auslass des inneren Kreislaufs (10), **dadurch gekennzeichnet, dass** die Steuervorrichtung (16) in die endseitige Platte (8) integriert ist, dass die endseitige Platte einen Kommunikationsdurchlass (15) zwischen dem inneren Kreislauf (10) und einem der Unterkreise (12.1) aufweist, wobei der Durchlass (15) senkrecht zur Ebene der endseitigen Platte (8) verläuft, sowie einen Kommunikationsdurchlass (17) zwischen dem inneren Kreislauf (10) und einem anderen Unterkreis (12.2), wobei der Kommunikationsdurchlass (17) sich in der Ebene der endseitigen Platte erstreckt, und dass die Steuervorrichtung (16) ein Dreiwegeventil ist, von dem ein Zulauf mit dem Auslass des inneren Kreislaufs (10) verbunden ist, der eine Ablauf mit dem Einlass des ersten Unterkreises (12.1) verbunden ist und der andere Ablauf mit dem Enfass des zweiten Unterkreises (12.2) verbunden ist.

2. Brennstoffzelle nach Anspruch 1, wobei das Dreiwegeventil (16) ein thermostatisch gesteuertes Ventil ist.

3. Brennstoffzelle nach dem vorangehenden Anspruch, wobei das Dreiwegeventil (16) ein Element (24) aufweist, dessen Volumen in Abhängigkeit von der Temperatur des Wärmeträgermedjums variiert, sowie ein Verschlussorgan (18), das unter der Wirkung des Elements (24) in einem Kanalabschnitt axial beweglich ist, der zwischen dem Einlass des ersten Unterkreises (12.1) und dem Einlass des zweiten Unterkreises (12.2) liegt, sowie zwei Ventilsitze (20, 22), die auf beiden Seiten des Verschlussorgans (18) angeordnet sind, wobei das
Verschlussorgan (18) mit dem einen oder anderen der Ventilsitze (20, 22) in Abhängigkeit von der Temperatur des Wärmeträgermediums zusammenwirkt, um den einen oder den anderen der Abläufe zu erschließen.

4. Brennstoffzelle nach dem vorangehenden Anspruch, wobei die endseitige Platte (8) einen Sammelraum (11) aufweist, in den der Auslass des inneren Kreislaufs (10) mündet, wobei das thermostatisch gesteuerte Ventil (16) im wesentlichen in dessen Zentrurn angeordnet ist, wobei der Zulauf des Ventils (16) derart ausgeführt ist, dass das Wärmeträgermedium, das in das Ventil (16) einströmt, das Element (24) umgibt, dessen Volumen in Abhängigkeit von der Temperatur variiert.

5. Brennstoffzelle nach dem vorangehenden Anspruch, wobei der Sammelraum (11) die Form einer axial verlaufenden Leitung aufweist, wobei der innere Kreislauf (10) seitlich an den Sammelraum angeschlossen ist, wobei das Verschlussorgan (18) sich orthogonal zur Achse der Leitung verlagert, wobei der Einlass des ersten Unterkreises (12.1) sich auf einer Seite der Achse der Leitung befindet und der Einlass des zweiten Unterkreises (12.2) sich auf der anderen Seite der Achse der Leitung befindet.

6. Brennstoffzelle nach dem vorangehenden Anspruch 4 oder 5, wobei die Achse des Sammelraums (11) im wesentlichen parallel zu einer Seite der endseitigen Platte (8) in der Nähe dieser Seite verläuft, wobei der quer verlaufende Kanal, in welchem sich das Verschlußorgan (18) verlagert, mit einern Ende axial in die genannte Seite mündet und an einen der Unterkreise angeschlossen ist und in die Stirnfläche der endseitigen Platte (8) orthogonal zu seiner Achse mündet und an den anderen Unterkreis angeschlossen ist.

7. Brennstoffzelle nach einem der vorangehenden Ansprüche, wobei die Brennstoffzelle als PEMFC ausgeführt ist.

## Claims

1. A fuel cell comprising a stack (6) of electrochemical cells and end plates (8) applying a tightening strain onto the electrochemical cells, a thermal management system formed by a heat transfer fluid flow circuit in the stack (6), called internal circuit (10), and by a heat transfer fluid flow circuit external to the stack (6), called external circuit (12), the internal circuit (10) and the external circuit (12) being connected at least at one of the end plate (10), the external circuit (12) comprising a first subcircuit (12.1) provided with a heat exchanger (14) and a second subcircuit (12.2) directly connected to the inlet of the internal circuit (10), a device (16) for controlling the flow of the heat transfer fluid in either or both subcircuits (12.1, 12.2) as a function of the temperature of said fluid at the outlet of the internal circuit (10), **characterized in that** said control device (16) being integrated in said end plate (8), **in that** said end plate comprises a communication passageway (1,5) between the internal circuit (10) and one of the subcircuits (12.1), said passageway (15) being perpendicular to the plane of said end plate (8) and a communication passageway (17) between the internal circuit (10) and the other subcircuit (12.2), said communication passageway (17) expending in the plane of the end plate and **in that** said control device (16) is a three-way valve, a feed way of which being connected to the outlet of the internal circuit (10), an exhaust way being connected
to the inlet of the first subcircuit (12.1) and the other exhaust way being connected to the inlet of the second subcircuit (12.2).

2. The fuel cell according to claim 1, wherein the three-way valve (16) is a thermostatic valve.

3. The fuel cell according to claim 2, wherein the thee valve (16) comprise an element (24) the volume of which varies as a function of the temperature of the heat transfer fluid, a shutter (18) axially movable under the action of said element (24) in a channel portion located between the inlet of the first subcircuit (12.1) and the inlet of the second subcircuit (12.2), and two valve seats (20, 22) provided on either side of the shutter (18), the shutter (18) cooperating with either valve seat (20, 22) as a function of the temperature of the heat transfer fluid to seal either exhaust way.

4. The fuel cell according to claim 3, wherein said end plate (8) comprises a collecting chamber (11) into which the outlet of the internal circuit (10) leads, the thermostatic valve (16) being substantially provided at the centre of the collecting chamber, the intake way of said valve (16) being such that the heat transfer fluid penetrating said valve (16) surrounds the element (24) the volume of which varies as a function of the temperature.

5. The fuel cell according two the previous claim, wherein the collecting chamber (11) is in the form of an axial duct, the internal circuit (10) being laterally connected to said collecting chamber, the shutter (18) moping orthogonally two the axis of the duct, the inlet of the first subcircuit (12.1) being located on one side of the axis of the duct and the inlet of the second subcircuit (12.2) being located on the other side of the axis of the duct.

6. The fuel cell according to claim 4 or 5, wherein the axis of the collecting chamber (11) is substantially parallel to a side of the end plate (8), in the vicinity of this side, the transverse channel in which the shutter (18) movers axially leading through an end into said side and connecting to one of the subcircuits, and leads into the face of the end plate (8) orthogonally to its axis and connects to the other subcircuit.

7. The fuel cell according to one of preceding claims, wherein the cell is of the PEMFC type.
